# EUROPÄISCHE PATENTSCHRIFT

(11) **EP 3 717 670 B1**
(45) Veröffentlichungstag und Bekanntmachung des Hinweises auf die Patenterteilung: **19.01.2022**
(21) Anmeldenummer: 18839810.1
(22) Anmeldetag: 26.11.2018
(51) Int. Cl.: C21D 9/00, C21D 1/10, C21D 1/42, C21D 1/667

(54) **VORRICHTUNG UND INDUKTIVES HÄRTEVERFAHREN ZUM INDUKTIVEN HÄRTEN VON METALLISCHEN WERKSTÜCKEN SOWIE VERWENDUNG DER VORRICHTUNG**
DEVICE AND INDUCTIVE HARDENING METHOD FOR INDUCTIVELY HARDENING METAL WORKPIECES, AND USE OF THE DEVICE
DISPOSITIF ET PROCÉDÉ DE TREMPE PAR INDUCTION POUR LA TREMPE PAR INDUCTION DE PIÈCES MÉTALLIQUES AINSI QU'UTILISATION DU DISPOSITIF

(30) Priorität: 29.11.2017 DE 102017011048
(43) Veröffentlichungstag der Anmeldung: 07.10.2020
(73) Patentinhaber: EFD Induction GmbH, 79106 Freiburg (DE)
(72) Erfinder: ECKERT, David, 04610 Meuselwitz (DE)
(74) Vertreter: Geitz Truckenmüller Lucht Christ
(86) Internationale Anmeldenummer: PCT/EP2018/000532
(87) Internationale Veröffentlichungsnummer: WO 2019/105581

(56) Entgegenhaltungen:
- DE-A1- 2 133 345
- DE-A1- 3 842 372
- DE-U1- 29 908 375
- US-A- 2 907 858
- US-A1- 2002 179 203

## Beschreibung

Die Erfindung betrifft eine Vorrichtung zum induktiven Härten von metallischen Werkstücken, ein induktives Härteverfahren unter Verwendung der Vorrichtung sowie Verwendung der Vorrichtung zum induktiven Härten.

Aus dem Stand der Technik sind Vorrichtungen zum induktiven Härten von metallischen Werkstücken bekannt, wobei horizontale Trommeleinrichtungen Werkstücke aufnehmen, sie einer Induktoreinheit zuführen und die erwärmten Werkstücke dann in ein Tauchbad überführen, um sie dort abzuschrecken.

Die DE 10 2011 108 875 A1 beschreibt eine Vorrichtung zum induktiven Härten, wobei metallische Werkstücke mittels eines Magnetfeldes induktiv erwärmt und hiernach durch ein geeignetes Abschreckmedium wieder gekühlt werden.

Dafür geeignete Induktoren, insbesondere für die Härtung von Zahnstangen, sind aus der DE 10 2012 014 765 A1 und EP 2 135 485 B1 bekannt. Dort werden Formen von Induktoren beschrieben, um längliche Werkstücke, wie beispielsweise Zahnstangen, zu härten.

DE-U 299 08375 beschreibt eine Vorrichtung zum Härten von Werkstücken, die vertikal ausgerichtet ist und in der die Werkstücke rundlaufen können. Die Werkstücke werden nacheinander in Härteeinheiten eingesetzt und dann die Vorrichtung gedreht, um das Werkstück der nächsten Bearbeitungsposition zuzuführen.Das erwärmte Werkstück wird in die Mitte gefördert und dort mit der Kühlstation abgekühlt .

DE-A 38 42 372 offenbart eine Härtevorrichtung mit einer Drehteller, wobei die Werkstücke auf dem Drehteller platziert werden und dann einem Induktor zugeführt werden, indem der Teller gedreht wird.

Die Abschreckung erfolgt nach dem Härten mit einer Zeitverzögerung, da die Werkstücke zunächst aus dem Induktor herausgezogen und hiernach in die Abschreckeinheit eingebracht werden müssen. Dies führt zu einer verzögerten Abschreckung, wodurch die Qualität der Härtung leiden kann.

Ausgehend von diesem Stand der Technik ist es Aufgabe der vorliegenden Erfindung, eine verbesserte Vorrichtung zum induktiven Härten von metallischen Werkstücken bereitzustellen, in der eine Abschreckung zeitnah nach dem Härtevorgang erfolgt.

Diese Aufgabe wird durch eine Vorrichtung mit den Merkmalen des Anspruchs 1 gelöst. Die weitere Aufgabe ein einfacheres und verbessertes Verfahren zum Härten von metallischen Werkstücken vorzuschlagen, wird durch das induktive Härteverfahren unter Verwendung der Vorrichtung mit den Merkmalen des unabhängigen Anspruchs 9 gelöst.

Ferner wird die Aufgabe, eine geeignete Verwendung einer induktiven Härtevorrichtung bereitzustellen, die einfach aufgebaut ist und eine verbesserte Härtung ermöglicht, durch die Verwendung einer induktiven Härtevorrichtung mit den Merkmalen des unabhängigen Anspruchs 10 gelöst.

Weiterbildungen der Vorrichtung, des Verfahrens und der Verwendung sind in den Unteransprüchen ausgeführt.

Eine erste Ausführungsform der Härtevorrichtung bezieht sich auf eine Vorrichtung zum induktiven Härten von metallischen Werkstücken mit einer Induktoreinheit zum Härten des metallischen Werkstücks und einer der Induktoreinheit zugeordneten Abschreckeinheit. Erfindungsgemäß weist die Vorrichtung eine Trommeleinheit auf, deren Rotationsachse vertikal ausgerichtet ist, und die eine Vielzahl Werkstückaufnahmen für jeweils ein Werkstück aufweist. Dabei ist die Abschreckeinheit der Trommeleinheit zugeordnet und weist zumindest zwei Abschreckbrausen auf, wobei zumindest eine der Abschreckbrausen jeder Werkstückaufnahme zugeordnet ist, so dass diese Abschreckbrause(n) mit der Trommeleinheit mitdreht/mitdrehen.

Die Drehrichtung der Trommeleinheit kann sowohl entgegen als auch mit dem Uhrzeigersinn laufen, je nachdem wie die Härtevorrichtung aufgebaut ist und wie die einzelnen Komponenten vor Ort Platz haben. Je nach Drehrichtung ist die Härtevorrichtung spiegelbildlich zu der Härtevorrichtung aufgebaut, die der jeweils anderen Drehrichtung entspricht..

In der Erfindung ist die Induktoreinheit an einer ersten Position entlang des Umfangs der Trommeleinheit und die Abschreckeinheit an einer zweiten Position entlang des Umfangs der Trommeleinheit ortsfest angeordnet, wobei die Abschreckeinheit in Drehrichtung der Trommeleinheit um einen Winkel kleiner als 90° in Bezug auf die Induktoreinheit versetzt angeordnet ist. Ferner weist die Abschreckeinheit zwei oder mehr Abschreckbrausen auf, die radial nach innen in Bezug zu der Trommeleinheit ausgerichtet sind.

Vorteilhaft kann hierdurch eine verbesserte Abschreckung ermöglicht werden. Die Abschreckung erfolgt nicht erst nach einer Zeit, in der die Trommeleinheit weiterdrehen muss und erst nach dieser Zeit die Abschreckeinrichtung erreicht, sondern die Abschreckung kann unmittelbar nach dem Induktionsvorgang beginnen. Gehärtet werden können mit der Vorrichtung sämtliche metallischen Werkstücke, die geeignet sind, mittels Induktion gehärtet zu werden, insbesondere längliche Werkstücke aus Stahl, wie Zahnstangen, Gelenkwellen oder Zahnräder, wie Kettenräder.

Die Induktoreinheit bildet den Ausgangspunkt für die Anordnung der einzelnen Komponenten der Vorrichtung zueinander, wenn im Folgenden von Winkelversatz die Rede ist. In einer Weiterbildung der Vorrichtung kann die Abschreckeinheit entlang des Umfangs der Trommeleinheit drei Abschreckbrausen aufweisen. Ein Winkelversatz zwischen Induktoreinheit und einer ersten Abschreckbrause kann in Drehrichtung der Trommeleinheit in einem Bereich von 20° bis 40°, bevorzugt bei 30° liegen. Ferner kann ein Winkelversatz zwischen Induktoreinheit und einer zweiten Abschreckbrause in einem Bereich von 30° und 50°, bevorzugt bei 45° liegen, und ein Winkelversatz zwischen Induktoreinheit und elner dritten Abschreckbrause in einem Bereich von 50° und 90°, bevorzugt bei 60° liegen. So sind die Brausen entlang eines bestimmten Winkelversatzes gleichmäßig verteilt und ermöglichen eine Art Vorhang" aus Abschreckmedium, durch den das Werkstück einfach hindurchgefahren werden kann.

Die Erfindung kann vorsehen, dass die Trommeleinheit an jeder Werkstückaufnahme eine oder mehrere Abschreckbrause(n) aufweist, die in Bezug zu der Werkstückaufnahme radial nach innen versetzt angeordnet ist/sind und deren Düsen radial nach außen gerichtet ist/sind. Diese Brause steht nicht fest neben der Trommeleinheit, sondern dreht sich mit der Trommeleinheit mit, wobei hinter jeder Werkstückaufnahme eine solche "mitdrehende" Brause vorgesehen ist. Das Werkstück kann somit neben der Abschreckung von außen auch von der anderen Seite, also vom Inneren der Trommeleinheit abgeschreckt werden. Alternativ oder zusätzlich kann die Trommeleinheit an jeder Werkstückaufnahme zwei Abschreckbrausen aufweisen, die in Bezug zu der Werkstückaufnahme seitlich angeordnet sind und deren Düsen sich gegenüberliegen. Hiermit kann direkt nach der Erwärmung und während des Drehens der Trommeleinheit abgeschreckt werden.

Die Brausen sind in einer Kastenform ausgebildet und weisen ein Brausenblech auf, in dem die Brausendüsen angeordnet sind. Ein Brausenblech weist mehrere Löcher auf, die mehrere Punktdüsen ergeben. Die Anzahl der Brauselöcher ist dabei von dem Werkstück, dessen Größe bzw. Abmessungen abhängig und kann der jeweiligen Anwendung angepasst sein. Als Abschreckmedium kann eine wässrige Polymerlösung oder ein anderes geeignetes Fluid verwendet werden.

In einer weiteren Weiterbildung der Vorrichtung kann der Abschreckeinheit eine Nachbrause zugeordnet sein, deren Winkelversatz in Bezug zu der Induktoreinheit in einem Bereich von 100° bis 160°, bevorzugt bei 120°, liegt. Damit kann das Werkstück nochmals mit Abschreckmedium beaufschlagt werden und einer Raumtemperatur angenähert werden, bevor das Werkstück mittels der Entladeeinheit aus der Trommeleinheit herausgenommen wird.

Die Härtevorrichtung kann vorsehen, dass die Werkstückaufnahme zur Aufnahme des Werkstücks zwei Spitzen aufweist, in die das Werkstück aufgenommen werden kann, eine obere Spitze und eine untere Spitze. Die untere Spitze ist feststehend und die obere Spitze ist gewichtbelastend gelagert. Durch die Gewichtsbelastung kann sich das Werkstück wärmebedingt ausdehnen. Dabei bleibt die auf dem Werkstück wirkende Kraft nahezu gleich, da ein konstantes Gewicht gehoben wird. Dies wirkt sich vorteilhaft auf den entstehenden Rundlauffehler nach der Härtung aus, der durch die Werkstückaufnahme verringert wird.

Ferner kann die Vorrichtung ein Längenmesssystem umfassen, wobei das Längenmesssystem eine oder mehrere Sensoreinheit(en) zur Erfassung der Länge und Position des Werkstücks aufweist. Durch das Messsystem kann somit die Längenänderung des erwärmten Werkstücks erfasst werden. Diese Daten werden durch die Maschinensteuerung verarbeitet und können als Positionssignal einer (Z-)Achse zugeführt werden. Mit Hilfe dieser Achse können das Werkstück bzw. der Induktor in der Induktoreinheit positioniert werden. Dadurch kann der Induktor zum einen immer zentrisch und zum anderen immer hinsichtlich der Länge exakt positioniert zum Werkstück ausgerichtet werden.

Dazu kann erfindungsgemäß vorgesehen sein, dass das Messsystem an der Position der Induktoreinheit angeordnet ist. Die Position des Messsystems kann aber auch an einer anderen Stelle entlang des Umfangs der Trommeleinheit vorliegen.

Die Vorrichtung kann ferner eine Be- und Entladeeinrichtung umfassen, die dazu ausgebildet ist, die Werkzeugaufnahmen der Trommeleinheit zu be- bzw. entladen. Damit können die Werkstücke in die Trommeleinheit bzw. die zugehörigen Werkstückaufnahmen eingesetzt und wieder herausgenommen werden.

In einer Weiterbildung der Erfindung kann ein Abstand zwischen Be- und Entladeeinheit und Induktoreinheit einem Drehwinkel der Trommeleinheit entsprechen, der in einem Bereich von 90° bis 200°, bevorzugt bei 140° liegt. Vorteilhaft kann das Be- und Entladen der zu härtenden Werkstücke in der Nebenzeit zum Härten erfolgen.

Ferner betrifft die Erfindung ein induktives Härteverfahren unter Verwendung einer erfindungsgemäßen Vorrichtung, wobei das Verfahren die folgenden Schritte umfasst:
- in einer Ausgangsposition Beladen der Trommeleinheit mittels der Be- und Entladeeinrichtung, dabei Einsetzen eines Werkstücks in eine Werkstückaufnahme,
- Drehen der Trommeleinheit um einen vorbestimmten Drehwinkel in eine Härteposition und damit Zuführen des Werkstücks zu der Induktoreinheit,
- induktiv Erwärmen des Werkstücks in der Induktoreinheit,
- Drehen der Trommeleinheit um einen weiteren vorbestimmten Drehwinkel in eine Abschreckposition und damit Zuführen des Werkstücks zu der Abschreckeinrichtung,
- während des Drehens in die Abschreckposition Starten der Abschreckbrause und der zumindest zwei Abschreckbrausen der Abschreckeinheit, dadurch Erzeugen eines Abschreckmedien-Vorhangs,
- bei Durchfahren der Abschreckposition mittels der Abschreckeinrichtung Abschrecken des induktiv erwärmten Werkstücks,
- nach erfolgtem Abschrecken des Werkstücks weiter Drehen der Trommeleinheit zur Ausgangsposition und Entladen des gehärteten Werkstücks aus der Werkstückaufnahme. Wenn die Trommeleinheit das Werkstück der Induktoreinheit zugeführt bzw. zugedreht hat, kann das Verfahren ferner vorsehen, dass der Induktor zum Werkstück gefahren wird und das Werkstück in der Trommeleinheit erwärmt. Nach erfolgter Erwärmung fährt der Induktor zurück und die Trommel kann weitergedreht werden. Eine Drehrichtung der Trommeleinheit kann gegen den Uhrzeigersinn oder im Uhrzeigersinn erfolgen, je nach Aufbau der erfindungsgemäßen Vorrichtung und Platzbedarf vor Ort.

Das erfindungsgemäße Verfahren kann kontinuierlich ablaufen oder auch schrittweise.

Das erfindungsgemäße Verfahren sieht vor, dass die Brausen der Abschreckeinheit sowie die mitdrehende Brause jeder Werkstückaufnahme synchron arbeiten, so dass das Werkstück, sobald es aus der Induktoreinheit herausgedreht wird, in die Abschreckeinheit weitergedreht wird.

In einer Weiterbildung des Verfahrens können, während sich die Trommeleinheit in der Induktionsposition befindet, mittels des Längenmesssystems Ist-Werte einer Länge bzw. einer Position des Werkstücks in der Induktoreinheit erfasst werden. Diese Ist-Werte werden an eine Datenverarbeitungseinheit zugeführt. Die Ist-Werte werden mit vorbestimmten Soll-Werten verglichen. Bei Abweichen der erfassten Ist-Werte von vorbestimmten Soll-Werten der Länge bzw. der Position des Werkstücks, wird mittels der Datenverarbeitungseinheit ein Positionssignal generiert und an die Steuerungseinheit weitergeleitet. Schließlich kann die Position bzw. eine Lage des Werkstücks in der Induktoreinheit angepasst oder korrigiert werden. Damit kann erreicht werden, dass der Induktor der Induktoreinheit stets zentrisch bzw. hinsichtlich der Länge des Werkstücks exakt zu diesem positioniert ausgerichtet ist.

Eine erfindungsgemäße Verwendung einer Vorrichtung zum induktiven Härten eines metallischen Werkstücks, d. h. zur Herstellung eines gehärteten metallischen Werkstücks, erzeugt ein Werkstück mit Hilfe der erfindungsgemäßen Vorrichtung. Damit lassen sich mit der Vorrichtung gehärtete Werkstücke erzeugen, die im Vergleich zum Stand der Technik eine verbesserte Härtung erfahren. Die sofortige Abschreckung von beiden Seiten des Werkstücks ermöglicht eine einfachere und schnelle Abschreckung.

Weitere Ausführungsformen der Härtevorrichtung sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung verschiedener Ausführungsformen der Erfindung.

Dabei zeigt
**Fig.** 1 eine schematische Ansicht einer ersten Ausführungsform der erfindungsgemäßen Härtevorrichtung, und
**Fig. 2** eine schematische Ansicht einer weiteren erfindungsgemäßen Ausführungsform der Härtevorrichtung.

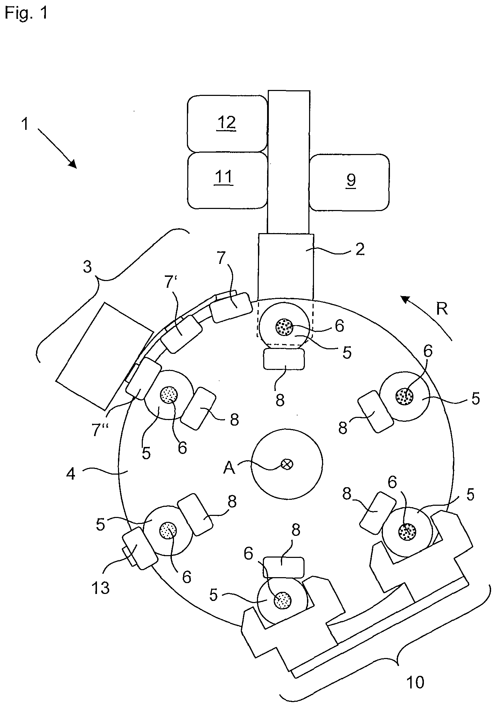

Die erfindungsgemäße Vorrichtung bezieht sich auf eine induktive Härtevorrichtung 1. In **Fig. 1** zeigt die Vorrichtung 1 eine Induktoreinheit 2 mit einem oder mehreren Induktoren. Gesteuert wird die Induktoreinheit 2 mittels einer Steuereinheit 11, die mit einer Datenverarbeitungseinheit 12 gekoppelt ist. Um Werkstücke 6, die mittels der Induktoreinheit 2 gehärtet werden sollen, exakt zu positionieren, ist ein Längenmesssystem 9 vorgesehen, das die Länge und Position des zu härtenden Werkstücks 6 mittels geeigneter Sensorik erfassen kann. Die erfassten Werte werden dann der Datenverarbeitungseinheit 12 zugeführt und daraus ggf. ein Positionssignal errechnet, um den Induktor der Induktoreinheit 2 in Bezug auf das Werkstück exakt zu positionieren.

Ferner weist die Vorrichtung 1 eine Trommeleinheit 4 auf, die drehbar gelagert ist und in Drehrichtung R gedreht werden kann (entgegen Uhrzeigersinn in **Fig. 1**) deren Rotationsachse A vertikal ausgerichtet ist. Die Trommeleinheit 4 weist eine Vielzahl Werkstückaufnahmen 5 für jeweils ein Werkstück 6 auf. Das Werkstück 6 kann in einer Werkstückaufnahme 5 gehalten werden und, wenn die Trommeleinheit 4 an die Position der Induktoreinheit 2 gelangt, mit dem Induktor der Induktoreinheit 2 operativ gekoppelt werden. Operativ gekoppelt meint, dass Induktor der Induktoreinheit 2 sowie das zugeführte Werkstück miteinander in Kontakt treten und der Induktor betätigt wird, um das Werkstück 6 zu härten. Nach **Fig. 1** wird der Induktor dem Werkstück 6 zugeführt. Nach erfolgter Erwärmung des Werkstücks 6 fährt der Induktor zurück und die Trommeleinheit 4 kann drehen.

Die Induktoreinheit 2 ist entlang des Umfangs der Trommeleinheit 4 an einer ersten Position, einer Erwärmposition, angeordnet und bildet den Ausgangspunkt für die Anordnung der einzelnen Komponenten der Vorrichtung 1. Die Abschreckeinheit 3 ist an einer zweiten Position entlang des Umfangs der Trommeleinheit 4 ortsfest angeordnet, wobei die Abschreckeinheit 3 in Drehrichtung R der Trommeleinheit 4 um einen Winkel kleiner als 90° in Bezug auf die Induktoreinheit 2 versetzt angeordnet ist. Die Abschreckeinheit 3 weist drei nebeneinander angeordnete Abschreckbrausen 7, 7', 7" auf, deren Düsen radial nach innen in Bezug zu der Trommeleinheit 4 ausgerichtet sind und so das Werkstück 6 mit Abschreckmedium beaufschlagen können.

Ein Winkelversatz zwischen Induktoreinheit 2 und einer ersten Abschreckbrause 7 kann in Drehrichtung R der Trommeleinheit 4 in einem Bereich von 20° bis 40°, bevorzugt bei 30° liegen. Ferner kann ein Winkelversatz zwischen Induktoreinheit 2 und einer zweiten Abschreckbrause 7' in einem Bereich von 30° und 50°, bevorzugt bei 45° liegen, und ein Winkelversatz zwischen Induktoreinheit 2 und einer dritten Abschreckbrause 7" in einem Bereich von 50° und 90°, bevorzugt bei 60° liegen. So sind die Brausen 7, 7', 7" entlang eines bestimmten Winkelversatzes gleichmäßig verteilt und ermöglichen eine Art "Vorhang" aus Abschreckmedium, durch den das Werkstück 6, das in der Werkstückaufnahme 5 gehalten ist, einfach hindurchgefahren werden kann.

Ferner ist hinter jeder Werkstückaufnahme 5 eine weitere Abschreckbrause 8 angeordnet, die in Bezug zu der Werkstückaufnahme 5 radial nach innen versetzt ist und deren Düsen radial nach außen gerichtet sind. In Drehrichtung R der Abschreckeinheit 3 nachgeordnet ist eine Nachbrause 13, mit der eine weitere Abschreckung des Werkstücks 6, wenn nötig, erfolgen kann.

Um die Trommeleinheit 4 mit den Werkstücken 6 bestücken zu können und sie nach erfolgter Härtung des Werkstücks 6 wieder entnehmen zu können, weist die Vorrichtung 1 eine Be- und Entladeeinheit 10 auf.

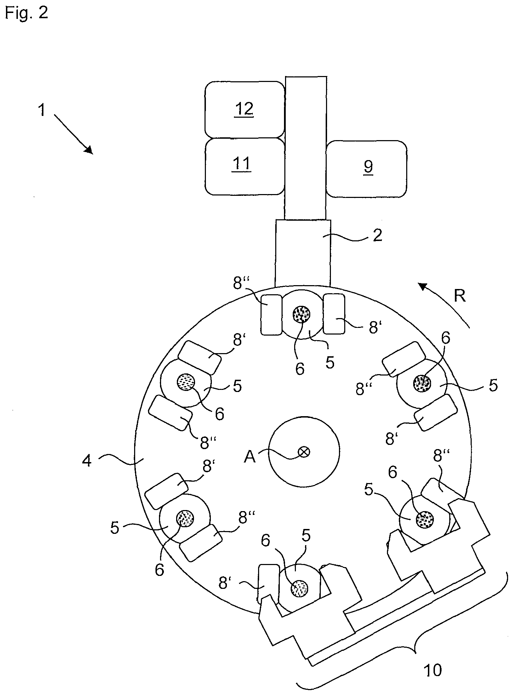

In **Fig. 2** zeigt die Härtevorrichtung 1, dass die Trommeleinheit 4 an jeder Werkstückaufnahme 5 zwei Abschreckbrausen 8', 8" aufweist. Diese Abschreckbrausen 8', 8" sind in Bezug zu der Werkstückaufnahme 5 seitlich angeordnet, so dass sich deren Düsen gegenüberliegen. Hiermit kann direkt nach der Erwärmung und während des Drehens der Trommeleinheit 4 abgeschreckt werden. In dieser Härtevorrichtung können die feststehenden Brausen aus **Fig. 1** auch weggelassen werden.

Ein Härteverfahren, das mit der Vorrichtung 1, wie sie in **Fig. 1** dargestellt ist, ausgeführt wird, kann folgendermaßen ablaufen:
Zuerst wird in einer Ausgangsposition die Trommeleinheit 4 mittels der Be- und Entladeeinrichtung 10 beladen und dabei ein Werkstück 6 in eine Werkstückaufnahme 5 eingesetzt. Hiernach wird die Trommeleinheit 4 um einen vorbestimmten Drehwinkel in eine Erwärmposition gedreht und damit das Werkstück 6 zu der Induktoreinheit 2 zugeführt. In der Induktoreinheit 2 wird das Werkstück 6 induktiv erwärmt. Nach dem Härten wird die Trommeleinheit 4 um einen weiteren vorbestimmten Drehwinkel in eine Abschreckposition gedreht und damit das Werkstück 6 zu der Abschreckeinrichtung 3 zugeführt Während die Trommeleinheit 4 in die Abschreckposition gedreht wird, werden die Abschreckbrause 8 und die Abschreckbrausen 7,7',7" der Abschreckeinheit 3 gestartet und dadurch ein Abschreckmedien-Vorhang erzeugt, den das Werkstück 6 dann durchfährt. Das Abschrecken des induktiv gehärteten Werkstücks 6 erfolgt damit dann mittels der Abschreckeinrichtung 3 bei Durchfahren der Abschreckposition. Nach erfolgtem Abschrecken des Werkstücks 6 wird die Trommeleinheit 4 zur Ausgangsposition weitergedreht und das gehärtete Werkstück 6 aus der Werkstückaufnahme 5 entladen.

### BEZUGSZEICHENLISTE

- 1: Vorrichtung
- 2: Induktoreinheit
- 3: Abschreckeinheit
- 4: Trommeleinheit
- 5: Werkstückaufnahme
- 6: Werkstück
- 7, 7', 7": Abschreckbrausen
- 8, 8', 8": Abschreckbrause
- 9: Längenmesssystem
- 10: Be- und Entladeeinheit
- 11: Steuereinheit
- 12: Datenverarbeitungseinheit
- 13: Nachbrause
- A: Rotationsachse
- R: Drehrichtung

## Patentansprüche

1. Vorrichtung (1) zum induktiven Härten von metallischen Werkstücken,
mit einer Induktoreinheit (2) zum Härten des metallischen Werkstücks (6) und einer Abschreckeinheit (3),
**wobei**
die Vorrichtung (1) eine Trommeleinheit (4) aufweist, deren Rotationsachse vertikal ausgerichtet ist, und die eine Vielzahl Werkstückaufnahmen (5) für jeweils ein Werkstück (6) aufweist,
wobei die Abschreckeinheit (3) der Trommeleinheit (4) zugeordnet ist und zumindest zwei Abschreckbrausen (7,7', 7", 8, 8', 8") aufweist, wobei zumindest eine der Abschreckbrausen (8, 8', 8") jeder Werkstückaufnahme (5) zugeordnet ist und mit der Trommeleinheit mitdreht, und wobei die Induktoreinheit (2) an einer ersten Position entlang des Umfangs der Trommeleinheit (4) und die Abschreckeinheit (3) an einer zweiten Position entlang des Umfangs der Trommeleinheit (4) ortsfest angeordnet ist, wobei die Abschreckeinheit (3) in Drehrichtung (R) der Trommeleinheit (4) um einen Winkel kleiner als 90° in Bezug auf die Induktoreinheit (2) versetzt angeordnet ist,
wobei die Abschreckeinheit (3) zumindest zwei Abschreckbrausen (7, 7') aufweist, die radial nach innen in Bezug zu der Trommeleinheit (4) ausgerichtet sind..

2. Vorrichtung nach Anspruch 1,
**dadurch gekennzeichnet, dass**
die Abschreckeinheit (3) entlang des Umfangs der Trommeleinheit (4) drei Abschreckbrausen (7, 7', 7") aufweist, und/oder
wobei ein Winkelversatz zwischen Induktoreinheit (2) und einer ersten Abschreckbrause (7) in Drehrichtung (R) der Trommeleinheit (4) in einem Bereich von 10° bis 20°, bevorzugt bei 15° liegt.

3. Vorrichtung nach Anspruch 1 oder 2,
**dadurch gekennzeichnet, dass**
die Trommeleinheit (4) an jeder Werkstückaufnahme (5) zumindest eine Abschreckbrause (8) aufweist, die in Bezug zu der Werkstückaufnahme (5) radial nach innen versetzt angeordnet ist und deren Düsen radial nach außen gerichtet sind, und/oder die Trommeleinheit (4) an jeder Werkstückaufnahme (5) zwei Abschreckbrausen (8', 8") aufweist, die in Bezug zu der Werkstückaufnahme (5) seitlich angeordnet sind und deren Düsen sich gegenüberliegen.

4. Vorrichtung nach zumindest einem der Ansprüche 1 bis 3,
**dadurch gekennzeichnet, dass**
die Vorrichtung (1) ein Längenmesssystem (9) umfasst, wobei das Längenmesssystem (9) zumindest eine Sensoreinheit zur Erfassung der Länge und Position des Werkstücks aufweist.

5. Vorrichtung nach Anspruch 4,
**dadurch gekennzeichnet, dass**
das Messsystem (9) an der Position der Induktoreinheit (2) angeordnet ist.

6. Vorrichtung nach zumindest einem der Ansprüche 1 bis 5,
**dadurch gekennzeichnet, dass**
die Vorrichtung (1) eine Be- und Entladeeinrichtung (10) umfasst, die dazu ausgebildet ist, die Werkzeugaufnahmen (5) auf der Trommeleinheit (4) zu be- bzw. entladen.

7. Vorrichtung nach zumindest einem der Ansprüche 1 bis 6,
**dadurch gekennzeichnet, dass**
ein Abstand zwischen Be- und Entladeeinheit (10) und Induktoreinheit (2) einem Winkelversatz in Drehrichtung (R) der Trommeleinheit (4) entspricht, der in einem Bereich von 90° bis 200°, bevorzugt bei 140° liegt.

8. Induktives Härteverfahren unter Verwendung einer Vorrichtung nach zumindest einem der Ansprüche 1 bis 7,
**umfassend die Schritte**
- in einer Ausgangsposition Beladen der Trommeleinheit (4) mittels der Be- und Entladeeinrichtung (10), dabei Einsetzen eines Werkstücks (6) in eine Werkstückaufnahme (5),
- Drehen der Trommeleinheit (4) um einen vorbestimmten Drehwinkel in eine Härteposition und damit Zuführen des Werkstücks (6) zu der Induktoreinheit (2),
- induktiv Härten des Werkstücks (6) in der Induktoreinheit (2),
- Drehen der Trommeleinheit (4) um einen weiteren vorbestimmten Drehwinkel in eine Abschreckposition und damit Zuführen des Werkstücks (6) zu der Abschreckeinrichtung (3),
- während des Drehens in die Abschreckposition Starten der Abschreckbrause (8) und der zumindest zwei Abschreckbrausen (7, 7') der Abschreckeinheit (3),
dadurch Erzeugen eines Abschreckmedien-Vorhangs,
- bei Durchfahren der Abschreckposition mittels der Abschreckeinrichtung (3) Abschrecken des induktiv erwärmten Werkstücks (6),
- nach erfolgtem Abschrecken des Werkstücks (6) weiter Drehen der Trommeleinheit (4) zur Ausgangsposition und Entladen des gehärteten Werkstücks (6) aus der Werkstückaufnahme (5).

9. Härteverfahren nach Anspruch 8,
**umfassend die Schritte**
in der Induktionsposition
- mittels des Längenmesssystem (9) Erfassen von Ist-Werten einer Länge und/oder einer Position des Werkstücks in der Induktoreinheit,
- Zuführen der Ist-Werte an eine Datenverarbeitungseinheit (12),
- bei Abweichen der erfassten Ist-Werte von vorbestimmten Soll-Werten der Länge und/oder Position des Werkstücks (6), mittels der Datenverarbeitungseinheit (12) Generieren eines Positionssignals und Weiterleiten an die Steuerungseinheit (11), und
- Korrigieren der Position des Werkstücks (6) in der Induktoreinheit (2).

10. Verwendung einer Vorrichtung zum induktiven Härten eines metallischen Werkstücks, zur Herstellung eines gehärteten metallischen Werkstücks, **dadurch gekennzeichnet, dass** die Vorrichtung eine Vorrichtung (1) zum induktiven Härten von metallischen Werkstücken nach zumindest einem der Ansprüche 1 bis 7 ist.

## Claims

1. Device (1) for inductively hardening metal workpieces,
with an inductor unit (2) for hardening the metal workpiece (6) and a quenching unit (3),
**wherein**
the device (1) has a drum unit (4) which has a vertically aligned rotational axis and a plurality of workpiece receivers (5) for one workpiece (6) each,
whereby the quenching unit (3) is associated with the drum unit (4) and
has at least two quenching sprays (7, 7', 7", 8, 8', 8"), wherein at least one of the quenching sprays (8, 8', 8") is associated with each workpiece receiver (5) and turns with the drum unit, and wherein the inductor unit (2) is stationarily arranged at a first position along the circumference of the drum unit (4) and the quenching unit (3) is stationarily arranged at a second position along the circumference of the drum unit (4), wherein the quenching unit (3) is arranged offset by an angle less than 90° in relation to the inductor unit (2) in the direction of rotation (R) of the drum unit (4), wherein the quenching unit (3) comprises at least two quenching sprays (7, 7') that are aligned radially inwardly with respect to the drum unit (4).

2. Device according to claim 1,
**characterised in that**
the quenching unit (3) along the circumference of the drum unit (4) has three quenching sprays (7, 7', 7"), and/or
wherein an angular offset between the inductor unit (2) and a first quenching spray (7) is within a range between 10° to 20°, preferably 15°, in the direction of rotation (R) of the drum unit (4).

3. Device according to claim 1 or 2,
**characterised in that**
the drum unit (4) has at least one quenching spray (8) at each workpiece receiver (5) that is arranged offset radially toward the inside in relation to the workpiece receiver (5) and which has nozzles that are radially directed toward the outside, and/or the drum unit (4) at each workpiece receiver (5) has two quenching sprays (8', 8") that are arranged at the side in relation to the workpiece receiver (5) and which have nozzles that are opposite one another.

4. Device according to at least one of the claims 1 to 3,
**characterised in that**
the device (1) comprises a length measurement system (9), wherein the length measurement system (9) has at least one sensor unit for detecting the length and position of the workpiece.

5. Device according to claim 4,
**characterised in that**
the measurement system (9) is arranged at the position of the inductor unit (2).

6. Device according to at least one of the claims 1 to 5,
**characterised in that**
the device (1) encompasses a loading and unloading unit (10) that is designed to load or unload the workpiece receivers (5) on the drum unit (4).

7. Device according to at least one of the claims 1 to 6,
**characterised in that**
a clearance between the loading and unloading unit (10) and the inductor unit (2) corresponds to an angular offset in the direction of rotation (R) of the drum unit (4) that is within a range between 90° to 200°, preferably 140°.

8. Inductive hardening method using a device according to at least one of the claims 1 to 7,
**comprising the steps**
- loading of the drum unit (4) in a starting position by means of the loading and unloading unit (10), including insertion of a workpiece (6) in a workpiece receiver (5),
- turning of the drum unit (4) by a predetermined rotation angle into a hardening position and thereby feeding of the workpiece (6) to the inductor unit (2),
- inductive hardening of the workpiece (6) in the inductor unit (2),
- turning of the drum unit (4) by an additional predetermined rotation angle into a quenching position and thereby feeding of the workpiece (6) to the quenching unit (3),
- during turning to the quenching position, starting of the quenching spray (8) and of at least two quenching sprays (7, 7') of the quenching unit (3), thereby generating a quenching medium curtain,
- when moving through the quenching position, quenching of the inductively heated workpiece (6) by means of the quenching unit (3),
- after quenching the workpiece (6), further turning of the drum unit (4) to the starting position and unloading of the hardened workpiece (6) from the workpiece receiver (5).

9. Hardening method according to claim 8,
**comprising the steps**
in the induction position
- by means of the length measuring system (9) detecting actual values of a length and/or a position of the workpiece in the inductor,
- delivering of the actual values to a data processing unit (12),
- in the event of deviation of the detected actual values from predetermined nominal values of the length and/or position of the workpiece (6), generating a position signal by means of the data processing unit (12) and forwarding it to the control unit (11), and
- correcting the position of the workpiece (6) in the inductor unit (2).

10. Use of a device for inductive hardening of a metallic workpiece, for production of a hardened metallic workpiece,
**characterised in that**
the device is a device (1) for inductive hardening of metallic workpieces according to at least one of the claims 1 to 7.

## Revendications

1. Dispositif (1) pour la trempe par induction de pièces métalliques,
avec un inducteur (2) pour la trempe de la pièce métallique (6) et une unité de trempe (3),
**ayant les caractéristiques suivantes :**
le dispositif (1) présente un tambour (4) dont l'axe de rotation est vertical et qui est pourvu de nombreux supports (5) pour respectivement une pièce (6),
l'unité de trempe (3) est affectée au tambour (4) et
comprend au moins deux douchettes de trempe (7, 7', 7", 8, 8', 8"), au moins une des douchettes (8, 8', 8") est assignée à chaque support de pièce (5) et tourne avec le tambour, l'inducteur (2) se trouve à une première position le long de la périphérie du tambour (4), et l'unité de trempe (3) est placée de façon fixe à une deuxième position le long de la périphérie du tambour (4), l'unité de trempe (3) est installée de façon décalée dans le sens de rotation (R) du tambour (4) à un angle inférieur à 90° par rapport à l'inducteur (2),
l'unité de trempe (3) possède au moins deux douchettes de trempe (7, 7') orientées radialement vers l'intérieur par rapport au tambour (4).

2. Dispositif selon la revendication 1,
**caractérisé en ce que**
l'unité de trempe (3) présente le long de la périphérie du tambour (4) trois douchettes de trempe (7, 7', 7") et/ou
un décalage angulaire entre l'inducteur (2) et une première douchette (7) dans le sens de rotation (R) du tambour (4), se situant dans une plage de 10° à 20°, idéalement à 15°.

3. Dispositif selon la revendication 1 ou 2,
**caractérisé en ce que**
le tambour (4) présente au niveau de chaque support de pièce (5) au moins une douchette de trempe (8), décalée par rapport à ce support (5) radialement vers l'intérieur et dont les buses sont orientées radialement vers l'extérieur, et/ou le tambour (4) présente au niveau de chaque support de pièce (5) deux douchettes de trempe (8', 8"), qui, par rapport au support de pièce (5), sont disposées latéralement et dont les buses se font face.

4. Dispositif selon au moins une des revendications 1 à 3,
**caractérisé en ce que**
le dispositif (1) comprend un système de mesure de longueur (9), ce système (9) étant équipé d'au moins un capteur pour mesurer la longueur et la position de la pièce.

5. Dispositif selon la revendication 4,
**caractérisé en ce que**
le système de mesure (9) est placé à la position de l'inducteur (2).

6. Dispositif selon au moins une des revendications 1 à 5,
**caractérisé en ce que**
le dispositif (1) comprend un système de chargement et de déchargement (10) conçu pour charger ou décharger les supports de pièce (5) sur le/du tambour (4).

7. Dispositif selon au moins une des revendications 1 à 6,
**caractérisé en ce que**
une distance entre l'unité de chargement et de déchargement (10) et l'inducteur (2) correspond à un décalage angulaire dans le sens de rotation (R) du tambour (4), qui se situe dans une plage de 90° à 200°, idéalement à 140°.

8. Procédé de trempe par induction utilisant un dispositif selon au moins une des revendications 1 à 7,
**englobant les étapes suivantes**
- Dans une position de départ, chargement du tambour (4) avec un système de chargement et de déchargement (10), en insérant une pièce (6) dans un support (5),
- Rotation du tambour (4) de la valeur d'un angle de rotation prédéfini dans une position de trempe, ce qui a pour effet d'amener la pièce (6) à l'inducteur (2),
- Trempe par induction de la pièce (6) dans l'inducteur (2),
- Rotation du tambour (4) de la valeur d'un autre angle de rotation prédéfini dans une position de trempe, ce qui a pour effet d'amener la pièce (6) à l'unité de trempe (3),
- Pendant la rotation dans la position de trempe, démarrage de la douchette de trempe (8) et des au moins deux douchettes (7, 7') de l'unité de trempe (3), ce qui a pour effet de générer un rideau de fluide de trempe,
- Lors du passage à la position de trempe, à l'aide de l'unité de trempe (3), trempe de la pièce chauffée par induction (6),
- Après la trempe de la pièce (6), rotation additionnelle du tambour (4) jusqu'à la position de départ et déchargement de la pièce trempée (6) à partir du support (5).

9. Procédé de trempe selon la revendication 8,
**englobant les étapes suivantes**
dans la position d'induction
- À l'aide du système de mesure de longueur (9), détermination des valeurs réelles d'une longueur et/ou d'une position de la pièce dans l'inducteur,
- Transmission des valeurs réelles à une unité de traitement des données (12),
- En cas d'écart des valeurs réelles mesurées par rapport aux valeurs de consigne prédéfinies de la longueur et/ou de la position de la pièce (6), au moyen de l'unité de traitement des données (12), génération d'un signal de position et transmission à l'unité de commande (11), et
- Correction de la position de la pièce (6) dans l'inducteur (2).

10. Utilisation d'un dispositif pour la trempe par induction d'une pièce métallique, dans le but de fabriquer une pièce métallique trempée,
**caractérisé en ce que**
le dispositif est un dispositif (1) pour la trempe par induction de pièces métalliques selon au moins une des revendications 1 à 7.
